# EUROPEAN PATENT SPECIFICATION

(11) **EP 0 441 592 B1**
(45) Date of publication and mention of the grant of the patent: **19.04.2000**
(21) Application number: 91300931.2
(22) Date of filing: 05.02.1991
(51) Int. Cl.: H01M 4/90, H01M 4/00, H01M 12/06

(54) **Air-assisted alkaline cells**
Von Luft gestützte alkalische Zellen
Cellules alcalines assistées par l'air

(30) Priority: 09.02.1990 US 477418
(43) Date of publication of application: 14.08.1991
(73) Proprietor: EVEREADY BATTERY COMPANY, INC., St. Louis Missouri 63164 (US)
(72) Inventor: Urry,Lewis Frederick, Columbia Station,OH 44028 (US)
(74) Representative: Lord, Hilton David

(56) References cited:
- EP-A- 0 140 973
- FR-A- 2 622 360
- GB-A- 2 109 154
- US-A- 3 748 184
- US-A- 4 105 830
- US-A- 4 121 018
- PATENT ABSTRACTS OF JAPAN, vol. 7, no. 111 (E-175)[1256], 14 May 1983
- PATENT ABSTRACTS OF JAPAN, vol. 8, no. 198 (E-265)[1635], 11 September 1984
- PATENT ABSTRACTS OF JAPAN, vol. 7, no. 276 (E-215)[1421], 09 December 1983

## Description

The present invention relates to air-assisted alkaline cells.

Alkaline cells are well known in the art. Conventional alkaline cells employ a zinc anode, a manganese dioxide cathode and an aqueous solution of potassium hydroxide for the electrolyte. These cells are readily available commercially for industrial and home applications.

A development on such alkaline cells is the air-assisted cell, again employing zinc as the anode, manganese dioxide as the cathode, and an aqueous solution of potassium hydroxide as the electrolyte. In the air-assisted cell, the positive electrode containing the manganese dioxide (MnO₂) is supported about its periphery and along its full length in the cell by a perforated, ribbed, air distribution grid. The bottom, or negative, end of the cell has an insulating support which allows air to enter the cell and pass up along the outside of the supported positive electrode.

The advantage of air-assisted cells is that, when the cell is initially put into a circuit, the electrochemical reaction depends primarily upon the presence of the manganese dioxide cathode. As the reaction progresses, and the manganese dioxide cathode is electrochemically reduced, air which has permeated into the cell is able to reoxidise, and thereby recharge, the manganese dioxide.

In an air-assisted cell, the discharged active cathode, that is the manganese dioxide, undergoes a reaction with the air in the cell, and with air which can enter the cell, to become recharged, reoxidising the reduced manganese oxide to manganese dioxide.

During discharge of the alkaline cell, the manganese dioxide is reduced to a lower oxidation state. The oxygen in the air will spontaneously restore or regenerate the higher oxidation state over a period of time. If the cell is subjected to brief periods of high rate discharge, then the cell must be rested for substantial periods of time between each discharge to enable the air to completely recharge the MnO₂. However, if the cell is continuously discharged at a rate which is less than the rate at which the MnO₂ is recharged by the incoming air, then the air recharges the MnO₂ as quickly as it is discharged.

Thus, regardless of the rate at which the cell is discharged, if the cell is drained at a low rate or is rested for a sufficient period of time, then the cathode's ability to be recharged is limited only by its access to air.

The cathode material is regenerated without involving the zinc anode material. The zinc is oxidised during the discharge but it cannot be regenerated during a rest period. In view of this, less cathode material needs to be added to an air-assisted alkaline cell and, in turn, the volume of zinc can be increased in the cell to increase the overall capacity of the cell.

The type of cell described above is a complex cell, in that it requires a cathode support which completely surrounds the cathode to ensure adequate exposure of the surface of the cathode to air. Furthermore, the interior of the cell requires a complex pattern of supports and air distribution passages to allow air to enter the cell and contact the MnO₂.

Manganese dioxide for use in electrochemical cells is conventionally electrolytic manganese dioxide (EMD). Although other forms of MnO₂ are known, EMD is generally preferred, and is industry standard.

US-A-4,121,018 discloses air depolarised alkaline primary cells, the cathode containing electrolytic or synthetic manganese dioxide and having an overall porosity of 8.5 to 40 percent. FR-A-2,622,360 discloses zinc-air cells having a cathode comprising electrolytic or chemical manganese dioxide.

In a first aspect, the present invention provides a cathode for an air-assisted alkaline cell, which cathode comprises a mixture of a highly porous manganese dioxide and a substantially solid manganese dioxide, with the highly porous manganese dioxide being present in an amount effective to enable recharging of the cathode prepared from the mixture when used in an air-assisted alkaline cell in the presence of air and with the substantially solid manganese dioxide being present in an amount to produce an acceptable alkaline cell in the absence of air.

A suitable source of oxygen is air, and will be the most usual. It may be feasible to employ a filter such that the only component of air to reach the cathode is oxygen, but it will generally be the case that a gas permeable membrane serves to admit gaseous components, while preventing escape of any active components from the cell.

Access of air to parts of the cell other than the cathode is generally undesirable, as corrosion or other side-effects may ensue. Thus, access of air to the cathode should be selective to the extent that little or no air reaches any other active chemical component of the cell. Access of all components of air to the cathode is not essential, as it is the oxygen which is responsible for the regeneration of the cathode.

It is an advantage of the present invention that it is not necessary to ensure direct exposure of a substantial part of the surface of the cathode to air by means specially designed for the purpose, but only to ensure that air, or at least oxygen, has access to a part of the cathode, from where it can diffuse through the cathode to allow regeneration.

The cathode comprises porous manganese dioxide to allow diffusion of oxygen for regeneration. This manganese dioxide need only be present in sufficient amount to permit diffusion of oxygen as required. Very small amounts may only be appropriate in instances where little diffusion is required, or it may be desired to maintain a portion of the cathode substantially solid, so that no porous material is required in such a portion.

It is generally preferred that the porous manganese dioxide be blended evenly with remaining manganese dioxide, so that as much as possible of the cathode is permeable to oxygen.

The remaining manganese dioxide is preferably substantially solid, and is preferably of a standard variety used in the manufacture of alkaline cells. In general, it will be this portion that is of most importance in the electrochemical reaction, and higher proportions of this component may be appropriate where less need for regeneration is envisaged.

Suitable means for permitting access of air to the cell are well known in the art. They may comprise suitably placed holes in the casing, the contents of the cell being protected by an air- or oxygen-permeable membrane placed between the hole or holes and the contents. Other precautions to prevent rupture of the membrane, for example, may be taken as required or desired.

Selective access of air or oxygen to the cathode may be by any suitable expedient. This may be achieved, for example, in a partitioned cell by permitting access of air only to the cathode partition.

Any suitable mode of assembly may be employed for the cells of the invention, provided that air may be allowed access to the cathode. Likewise, any suitable cell may be employed.

The present invention also provides an air-assisted alkaline cell, comprising such a cathode, and a mixture of manganese dioxide suitable for the manufacture of such a cathode, especially containing polytetrafluoroethylene.

A composition suitable for use in the manufacture of a cathode for an air-assisted alkaline cell comprises a mixture of highly porous MnO₂ and substantially solid MnO₂ with the highly porous MnO₂ being present in an amount effective to enable recharging of the cathode prepared from the mixture when used in an air-assisted alkaline cell in the presence of air and with the substantially solid MnO₂ being present in an amount to produce an acceptable alkaline cell in the absence of air.

Preferably, the cathode comprises a mixture of a porous MnO₂ and a substantially solid MnO₂, having a packing density gradient when shaped into a cathode with the lowest packing density predominating at the portion of said cathode intended to be contacted by air during the operation of the cell.

In one preferred embodiment, the mixture is predominantly solid MnO₂ in order to provide a cell with a high ampere hour output in the absence of air, a preferred approximate ratio by weight being 1:5 of porous MnO₂ to substantially solid MnO₂.

There is provided, in another aspect, a cathode as defined, wherein the porous MnO₂ is present in an effective amount to provide air paths into the cathode and thereby recharge the cell in the presence of air.

A preferred method for preparing the cathode for use in an air-assisted alkaline cell comprises the following steps:
mixing a composition comprising porous MnO₂ and substantially solid MnO₂ with the porous MnO₂ being present in an amount effective to recharge the cathode in the presence of air;
forcing the composition into a form;
subjecting the composition to pressure while in the form to shape a cathode having a packing gradient with the lowest volume percent of solids being at one end of the cathode and the highest at the other end of the cathode. It is preferred to use an impact extrusion machine to subject the cathode to pressure.

In a preferred embodiment, there is provided an air-assisted alkaline cell comprising:
a conductive container for supporting the components of the cell and for forming an external terminal for the cell;
a cathode electrode in contact with the inner wall of the container, the cathode comprising a mixture of porous MnO₂ and substantially solid MnO₂ with the porous MnO₂ being present in an effective amount to recharge the cell in the presence of air;
an anode electrode, the anode electrode comprising metallic zinc, a binder and an electrolyte;
a separator for electrically isolating the cathode electrode from the anode electrode;
an anode current collector in electrical contact with the anode electrode;
an external terminal for the cell in contact with the anode current collector;
an aqueous alkaline electrolyte for facilitating the electrochemical reaction in the cell; and
an air permeable seal for closing the conductive container and for allowing oxygen to enter the cell and come in contact with the cathode electrode. The aqueous alkaline electrolyte is preferably an aqueous solution of potassium hydroxide.

A method for preparing an air-assisted alkaline cell in accordance with the present invention comprises the following steps:
providing a conductive container for the cell which can serve as the first external terminal for the cell;
preparing a mixture of porous MnO₂ and substantially solid MnO₂;
loading the mixture of porous MnO₂ and substantially solid MnO₂ in the container to form a cathode electrode;
adding a separator to the container to electrically isolate the cathode electrode from the anode electrode;
adding a zinc anode composition to the container in contact with the separator; and
providing an anode current collector and an air permeable conductive cover for the cell, the conductive cover forming the second external terminal for the cell. The anode composition preferably comprises a mixture of zinc powder and a binder.

Thus, the air-assisted alkaline cells of the invention do not require the presence of an air distribution grid. Such grids are expensive and occupy space within the cell that otherwise could be occupied by active material to increase the energy capacity of the cell. The cells of the invention, therefore, also have increased continuous drain service in an air-free environment because the amount of MnO₂ in the cell can be increased proportionately. Likewise, the cells of the invention have improved energy capacity in the presence of air, due to an increased amount of zinc in the cell.

A good source of highly porous manganese dioxide is known as chemically synthesised manganese dioxide, or CMD. CMD is usually marketed with a porosity of 25% to 35%. However, CMD can be prepared in the form of very porous spheres having a porosity of approximately 60%. The porous spheres have a substantial amount of surface available for reaction with oxygen in an air-assisted cell. If a cell were prepared using CMD as the only active cathode material the total energy capacity of the cell would be lowered due to the decrease in the amount of MnO₂ available per unit volume of cathode.

Therefore, in order to increase the total energy capacity of the cell in an air-free environment, substantially solid MnO₂ should be available for the cell reaction. A good source of substantially solid MnO₂ is electrolytically deposited MnO₂ or EMD. EMD can be obtained in the form of dense particles after the electrolytically deposited material is stripped from the electrodes, crushed and screened. EMD has a porosity of approximately 10%-16% and therefore is a substantially solid material.

Since CMD and EMD are both porous materials, but with CMD being substantially porous while EMD is substantially solid, the terms "CMD" and "highly porous" will be used interchangeably herein, as will "EMD" and "substantially solid".

Since in the operation of an air-assisted cell the MnO₂ is regenerated, only sufficient highly porous MnO₂ is necessary to provide good rechargeability of the MnO₂ in the presence of air. In order to increase the total energy capacity of the cell, EMD can be added to supply additional active cathode material. As the ratio of EMD to CMD increases, the cell's air-free capacity also increases. The amount of CMD and EMD used in the cathode of the cell depends on the desired parameters of the cell with, for example, more or less CMD being used per cathode depending on the energy capacity desired in the presence of air. For a good cell capacity in an air-free environment and good rechargeability in an environment containing air, a mixture of 1:5, that is, one part by weight of CMD to five parts by weight of EMD is preferred.

While CMD is a good source of highly porous manganese dioxide, other suitable sources may be used. Likewise, EMD is a readily available source of bulk, substantially solid, manganese dioxide. However, other sources are available, including naturally occurring manganese dioxide, and even conventionally available low porosity CMD and, so, while EMD is preferred, other sources may be used.

The CMD and EMD are added to the mixer along with a small amount of Teflon (trade mark), approximately 0.6% by weight of an aqueous solution, which is used to selectively wetproof the cathode and to improve the stability of the formed electrode structure. Teflon is a trademark of DuPont and is used to identify polytetrafluoroethylene polymeric materials. The selective wetproofing of the MnO₂ keeps some of the CMD surface available for contact with air so that the MnO₂/air/electrolyte junction needed for rechargeability is achieved in the finished cell.

After thoroughly mixing the components, the cathode composition is poured, for example, into a steel container for the cell. An impact extruder is preferably used to load the cell container with the cathode material. Under the pressure of the impact extruder, the cathode material becomes tightly packed about the walls of the container, with the Teflon serving to bind the mixture into a compact mass. It has been observed in the manufacture of the cells that a porosity gradient is formed in the manganese dioxide in the cathode, with the highest packing density being at the bottom of the container and with the lowest packing density at the top. Thus, the top of the cathode is not as tightly packed as the bottom and, in turn, more of the CMD/EMD mixture is exposed to air access at the top. The packing density of the material at the top of the formed cathode is generally approximately 70% while the packing density at the bottom is approximately 100%.

It is highly desirable in the operation of the cathode for the air-assisted alkaline cell of the present invention that some of the MnO₂ be exposed simultaneously to a conductor, to electrolyte and to air. In the air-assisted cells of the art, this was achieved through the use of the air distribution grid. No such grid is used or required in the cells of the invention, with the highly porous MnO₂ providing a surface area of MnO₂ and air paths into the top of the cathode for the recharging of the air-assisted cell, while the substantially solid MnO₂ provides the bulk presence of manganese dioxide for the conventional operation of the alkaline cell.

CMD can be prepared starting with manganese ore which is first converted to a nitrate and then treated with ammonium carbonate and chemical oxidants to form manganese carbonate. The manganese carbonate, after washing, is roasted in the presence of oxygen and chemical oxidants to form manganese dioxide, which is then purified by washing to obtain battery grade manganese dioxide material. The preferred CMD used in the preparation of the cathode of the air-assisted cell is a material which may be obtained from Sedema (a division of Sadacam S.A. of Brussels, Belgium) as Sedema TR manganese dioxide. The material has a porosity of approximately 60%.

EMD is obtained from the electrolytic deposition of manganese dioxide and is obtainable from Eveready Battery Co., Inc., MA, USA and other commercial suppliers.

When the materials are combined in a homogeneous mixture, and then added to the container to form the cathode, the preferred average porosity for the cathode is 20%. CMD has a porosity of approximately 0.13 cc/g while EMD has a porosity of approximately 0.022 to 0.035 cc/g.

The invention will now be further illustrated with reference to the accompanying drawings, in which:
Fig. 1 is a sectional view of an inverted air-assisted alkaline cell of the present invention;
Fig. 2 is an exploded view of the subassembly used in assembling the cell;
Fig. 2a is a plan view of the air permeable seal member used in the subassembly of Fig. 2;
Fig. 3 is a series of curves generated through the continuous discharge of several different cells; and
Fig. 4 is a series of curves generated through the intermittent discharge of several different cells.

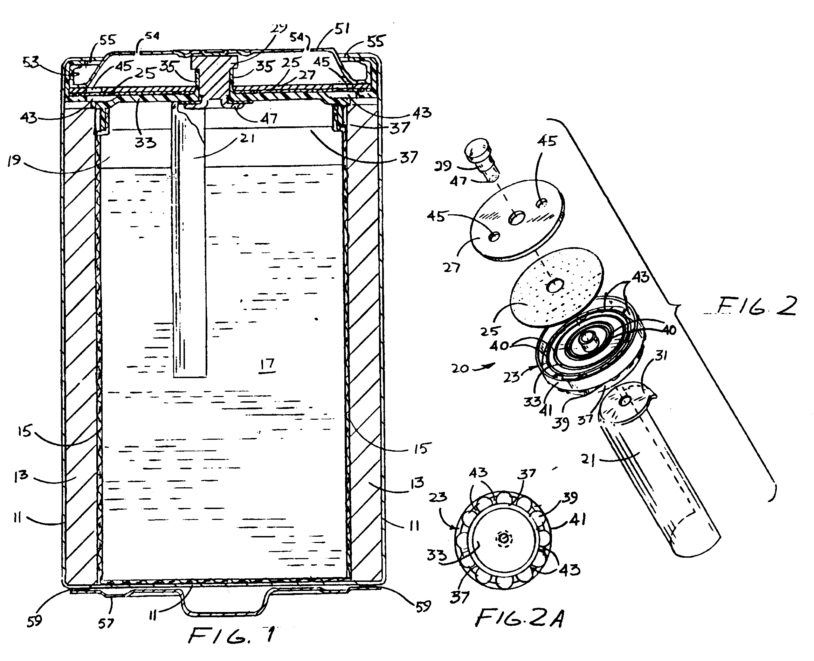

Referring to Fig. 1, the air-assisted alkaline cell is assembled in a conventional conductive steel container 11 which also forms an external terminal for the cell. The cathode 13 for the cell is a mixture of highly porous manganese dioxide and substantially solid manganese dioxide. The mixture is prepared in a conventional mixer.

After the cathode is formed in the container, a separator 15 is added to electrically isolate the anode material from the cathode and the container while still permitting ion transport between the electrodes. The anode material 17 is then added to the separator-lined cavity of the cell. The anode material comprises a mixture of zinc powder, a gel-forming binder and the liquid electrolyte used in the cell. The preferred binder is Carbopol 934 which is a carboxy polymethylene polymer available from the B. F. Goodrich Company, of Cleveland, Ohio.

The alkaline electrolyte solution is approximately a 34% to 37% by weight solution of potassium hydroxide in water. The electrolyte from the anode mixture 17 permeates the separator 15, and the cathode 13. An open area 19 is left in the cell to provide room for expansion of the anode mixture 17.

A subassembly indicated generally by the number 20, referring to Fig. 2, is used to close the cell. The subassembly consists of an anode current collector 21, a seal member 23, an air permeable gasket 25, a neutral cover 27 and a rivet 29 which is used to join the several pieces together.

The anode current collector 21 is made from an electrically conducting metal that is inert to the cell's caustic environment. The collector metal preferably is sheet brass. The anode current collector 21 is rolled to have an arcuate shape. The sheet metal is folded over to form a flat surface which fits tightly against the bottom of the seal member 23. A nail shaped collector is also suitable.

The seal member 23 is made of an organic polymeric material which is compatible with the several components of the cell. The preferred material is polypropylene. The seal member 23 has a substantially flat bottom portion 33 surrounding a sleeve 35. Below and in line with the periphery of the bottom portion 33 is a substantially circular projecting first wall portion 37. A plurality of circumferentially spaced spokes 39 extend from the periphery of the bottom portion 33 out to and below a second wall portion 41 extending upwardly away from bottom portion 33. The spaces 43 between the spokes 39 provide a passage for air to pass through the seal member 23.

A membrane 25 fits within the area of the seal member 23 bounded by the wall 41. The membrane is made of two layers of Teflon (trade mark). One layer is a nonwoven film and the other is a mesh. The two layers are heat sealed together and form an air permeable membrane for the cell. The gasket 25 can be fastened to the bottom 33 and the spokes 39 by welding. A fatty polyamide adhesive, such as that disclosed in US-A-3,922,178, can be used to backup the weld and to prevent electrolyte creep between the polypropylene seal and the microporous gasket. Two beads of the adhesive may be used. One bead is placed around the periphery of the bottom 33 where it joins the inside of the wall 41. The second bead can be placed on the bottom 33 where it joins the outer wall of the sleeve 35.

To further ensure that the microporous gasket 25 stays in position, concentric raised ridges 40 can be formed on the bottom 33 of the seal 23. The gasket 25 will then be clamped between the ridges on the bottom 33 and the neutral cover 27.

The vented neutral cover 27 is preferably made of stainless steel and has a pair of spaced apertures 45 therein to allow the passage of air into the cell. The vented cover 27 will fit within the area of the seal member 23 bounded by the wall 41.

The rivet 29 is preferably made of brass and has a thinned portion 47 which can be easily spread to bind all of the parts of the subassembly 20 together.

The dimensions of the several components of the subassembly 20 and of the overall cell can be varied to meet particular size requirements for the type of cell being assembled.

The subassembly 20 is inserted into the bottom of the inverted cell as shown in Fig. 1. The wall 37 moves the top edge of the separator 15 away from the cathode material 13. The wall 37 and separator 15 protect the anode material 17 from contact with the air entering the cell. This avoids the loss of zinc due to direct reaction with oxygen. The wall portion 41 of the seal assembly 23 insulates the neutral cover 27 from electrical contact with the container 11.

To complete assembly of the cell, a bottom cover 51 is placed into the steel container 11 and is also isolated from contact with the container by the wall portion 41 of the subassembly 20. The bottom cover 51 makes electrical contacts with the rivet 29, or other suitable electrically conductive means, enabling the bottom cover 51 to become the second external terminal for the cell. The edge of the steel container 11, and of the subassembly 20, are then rolled to hold the upturned portion 53 of the bottom cover 51 locked in position on the bottom of the cell. A gap 55 surrounds the bottom cover 51, separating it from contact with the container 11. The bottom cover 53 preferably contains three small apertures 54, two of which are shown in Fig. 1, spaced approximately 120° apart which provide a passage for air to enter into the bottom of the cell. The air can pass through the subassembly 20 and contact the top portion of the cathode through the air passage 43. The top cover 57 can be fastened to the container by welds 59 after the cathode is rammed into place. It can be added before or after this step as it is merely attached to the container.

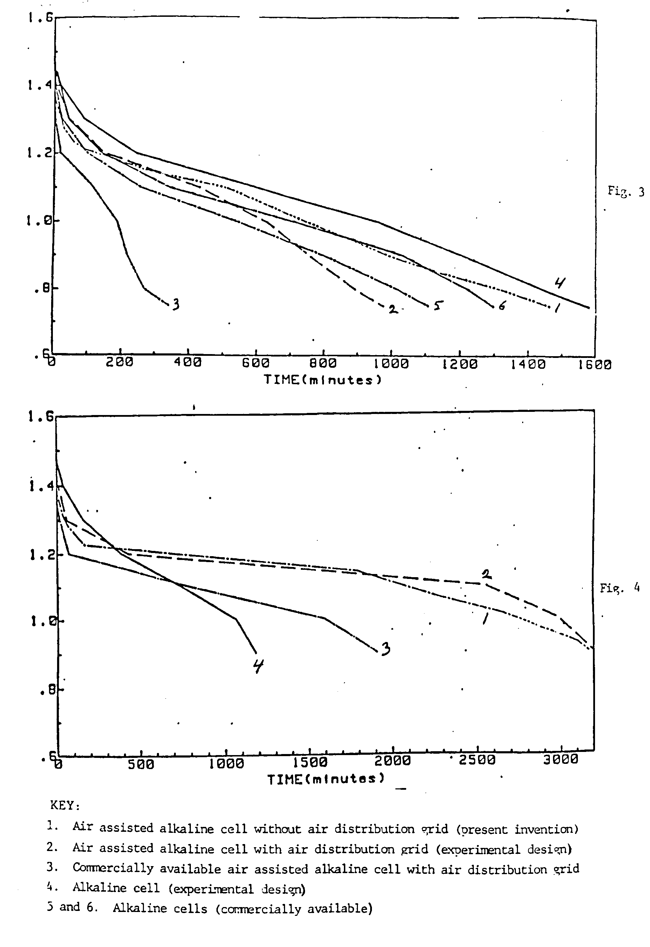

Several D-size air-assisted alkaline cells of the present invention were tested in 2.2 ohm continuous service tests (Fig. 3). The test results showed that the air-assisted cell of the present invention (1) was better than two commercially available alkaline cells (5 and 6), despite being in continual testing conditions, which are less than ideal circumstances for air-assisted cells. Further, the cells of the invention were much better than a commercially available air-assisted alkaline cell (3) and an experimental air-assisted cell (2). The cell was not as good as an experimental alkaline cell (4), a result which was anticipated, as a non air-assisted cell is able to employ more, solid MnO₂.

Since an air-assisted alkaline cell recovers some of its charge while standing between high rate pulsed discharges, a dry cell industry recognised intermittent discharge test was then carried out (Fig. 4). In the standard test chosen, the test curves are generated by discharging D-size cells on a 2.2 ohm load for four minutes per hour, eight hours per day. The total discharge time per day being 32 minutes. However, the curve marked 1 was produced by discharging a D-size cell on a 2.2 ohm load for 4 minutes per hour, twenty-four hours a day (CIT, Continuous Intermittent Test). The total discharge time per day was 96 minutes. The impact of using the industry standard test, instead of the CIT regime, is that the cell has much more time to recover when it is tested for 32 minutes per day instead of 96 minutes per day. Therefore, one would expect that cell 1, manufactured without an air distribution grid, would provide more service when evaluated on the industry standard test instead of the CIT test. Despite this difference in test schedules, cell 1, without an air grid, performed substantially the same as cell 2, with an air grid.

In the assembly of the air-assisted alkaline cell, the air holes 54 in the external electrode 51 may be closed by a suitable seal tab, such as that disclosed in US-A-4,649,090. The seal tab protects the interior of the cell from deleterious environmental conditions and maintains the freshness of the cell.

The preferred label material and configuration for the fully assembled cell is as disclosed in US-A-4,801,514. The multi-layer adhesive label disclosed therein is particularly useful for dry cell batteries.

Thus, the present invention provides an improved air-assisted alkaline cell. The air-assisted cell does not require a cathode support or air distribution grid, but instead relies on the porosity of the manganese dioxide to provide paths for air to travel into the electrode and thereby enable recharging of the MnO₂ to occur. The porous air distribution support is also not necessary in this cell, enabling more active materials to be employed in the same size container.

## Claims

1. A cathode for an air-assisted alkaline cell, which cathode comprises a mixture of a highly porous manganese dioxide ad a substantially solid manganese dioxide, with the highly porous manganese dioxide being present in an amount effective to enable recharging of the cathode prepared from the mixture when used in an air-assisted alkaline cell in the presence of air and with the substantially solid manganese dioxide being present in an amount to produce an acceptable alkaline cell in the absence of air.

2. A cathode according to Claim 1, wherein the highly porous manganese dioxide has a porosity of between 25 and 35% or of 60%.

3. A cathode according to Claim 2, wherein the solid manganese dioxide has a porosity of between 10 and 16%.

4. A cathode according to any preceding Claim, wherein the mixture of porous manganese dioxide and substantially solid manganese dioxide is in an approximate ratio by weight of 1:5 of porous manganese dioxide to substantially solid manganese dioxide.

5. A cathode according to Claim 4 having a packing density gradient such that the lowest packing density predominates at the portion of the cathode adapted to be contacted by air during the operation of the cell.

6. A cathode according to any preceding Claim wherein the porous manganese dioxide is chemically prepared manganese dioxide and/or the substantially solid manganese dioxide is electrolytically prepared manganese dioxide.

7. A cathode according to any preceding Claim, wherein in the mixture of porous manganese dioxide and substantially solid manganese dioxide the porous manganese dioxide is present in an effective amount to provide air paths into the cathode and thereby recharge the cell in the presence of air.

8. A cathode according to any preceding Claim, comprising sufficient porous manganese dioxide to enable at least some recharging of the cathode when the cell is used in the presence of air, and sufficient substantially solid manganese dioxide to provide an effective cell when the cell is used in the absence of air.

9. An alkaline cell comprising a cathode according to any one of the preceding Claims, the cell having means to permit access of oxygen selectively to the cathode.

10. A mixture of manganese dioxides suitable for manufacturing a cathode according to any one of Claims 1 to 8.

11. A mixture according to Claim 10, comprising polytetrafluoroethylene as a component.

## Patentansprüche

1. Kathode für eine luftunterstützte alkalische Zelle, wobei die Kathode ein Gemisch aus einem hochporösen Mangandioxid und einem im wesentlichen massiven Mangandioxid aufweist, wobei das hochporöse Mangandioxid in einem wirksamen Anteil vorhanden ist, um das Wiederaufladen der aus dem Gemisch hergestellten Kathode zu ermöglichen, wenn diese in einer luftunterstützten alkalischen Zelle in Gegenwart von Luft eingesetzt wird, und wobei das im wesentlichen massive Mangandioxid in einem Anteil vorhanden ist, der bei Abwesenheit von Luft die Herstellung einer akzeptablen alkalischen Zelle ermöglicht.

2. Kathode nach Anspruch 1, wobei das hochporöse Mangandioxid eine Porosität von 25 bis 35% oder von 60% aufweist.

3. Kathode nach Anspruch 2, wobei das massive Mangandioxid eine Porosität von 10 bis 16% aufweist.

4. Kathode nach einem der vorstehenden Ansprüche, wobei das Gemisch aus porösem Mangandioxid und im wesentlichen massivem Mangandioxid ein Gewichtsverhältnis des porösen Mangandioxids zu dem im wesentlichen massiven Mangandioxid von annähernd 1:5 aufweist.

5. Kathode nach Anspruch 4, die einen Packungsdichtegradienten aufweist, derart daß die niedrigste Packungsdichte in dem Abschnitt der Kathode überwiegt, der für den Luftkontakt während des Betriebs der Zelle eingerichtet ist.

6. Kathode nach einem der vorstehenden Ansprüche, wobei das poröse Mangandioxid chemisch hergestelltes Mangandioxid und/oder das im wesentlichen massive Mangandioxidelektrolytisch hergestelltes Mangandioxid ist.

7. Kathode nach einem der vorstehenden Ansprüche, wobei in dem Gemisch aus porösem Mangandioxid und im wesentlichen massivem Mangandioxid das poröse Mangandioxid in einem wirksamen Anteil vorhanden ist, um Luftwege in die Kathode zu schaffen und dadurch die Zelle in Gegenwart von Luft wiederaufzuladen.

8. Kathode nach einem der vorstehenden Ansprüche, die eine ausreichende Menge poröses Mangandioxid aufweist, um zumindest eine gewisse Wiederaufladung der Kathode zu ermöglichen, wenn die Zelle in Gegenwart von Luft verwendet wird, und eine genügende Menge im wesentlichen massives Mangandioxid, um eine leistungsfähige Zelle bereitzustellen, wenn die Zelle in Abwesenheit von Luft eingesetzt wird.

9. Alkalische Zelle mit einer Kathode nach einem der vorstehenden Ansprüche, wobei die Zelle eine Einrichtung aufweist, um einen selektiven Sauerstoffzutritt zur Kathode zuzulassen.

10. Gemisch von Mangandioxiden, das sich zur Herstellung einer Kathode nach einem der Ansprüche 1 bis 8 eignet.

11. Gemisch nach Anspruch 10, das Polytetrafluorethylen als Bestandteil aufweist.

## Revendications

1. Cathode pour une cellule alcaline assistée par l'air, la cathode comprenant un mélange de dioxyde de manganèse hautement poreux et de dioxyde de manganèse pratiquement solide, la teneur en dioxyde de manganèse hautement poreux étant suffisante pour permettre la recharge de la cathode préparée à partir du mélange en cas d'utilisation dans une cellule alcaline assistée par l'air en présence d'air, la teneur en dioxyde de manganèse pratiquement solide étant suffisante pour produire une cellule alcaline acceptable en cas d'absence d'air.

2. Cathode selon la revendication 1, dans laquelle le dioxyde de manganèse hautement poreux a une porosité comprise entre 25 et 35% ou de 60%.

3. Cathode selon la revendication 2, dans laquelle le dioxyde de manganèse solide a une porosité comprise entre 10 et 16%.

4. Cathode selon l'une quelconque des revendications précédentes, dans laquelle le rapport en poids approximatif du mélange entre le dioxyde de manganèse poreux et le dioxyde de manganèse pratiquement solide est de 1:5 de dioxyde de manganèse poreux par rapport au dioxyde de manganèse pratiquement solide.

5. Cathode selon la revendication 4 ayant un gradient de densité de tassement tel que la densité de tassement la plus réduite est prédominante au niveau de la partie de la cathode destinée à être contactée par l'air au cours du fonctionnement de la cellule.

6. Cathode selon l'une quelconque des revendications précédentes, dans laquelle le dioxyde de manganèse poreux est du dioxyde de manganèse préparé chimiquement, et/ou le dioxyde de manganèse pratiquement solide est du dioxyde de manganèse préparé par électrolyse.

7. Cathode selon l'une quelconque des revendications précédentes, dans laquelle le mélange de dioxyde de manganèse poreux et de dioxyde de manganèse pratiquement solide a une teneur en dioxyde de manganèse poreux suffisante pour établir des voies d'air dans la cathode pour recharger ainsi la cellule en présence d'air.

8. Cathode selon l'une quelconque des revendications précédentes, comprenant une teneur suffisante en dioxyde de manganèse poreux pour permettre au moins une certaine recharge de la cathode lors de l'utilisation de la cellule en présence d'air, et une teneur suffisante en dioxyde de manganèse pratiquement solide pour fournir une cellule efficace lors de l'utilisation de la cellule en cas d'absence d'air.

9. Cellule alcaline comprenant une cathode selon l'une quelconque des revendications précédentes, la cellule comportant un moyen permettant l'accès sélectif de l'oxygène à la cathode.

10. Mélange de dioxydes de manganèse approprié pour la fabrication d'une cathode selon l'une quelconque des revendications 1 à 8.

11. Mélange selon la revendication 10, comprenant du polytétrafluoréthylène comme composant.
